# EUROPEAN PATENT SPECIFICATION

(11) **EP 2 469 119 B1**
(45) Date of publication and mention of the grant of the patent: **20.04.2016**
(21) Application number: 11195011.9
(22) Date of filing: 21.12.2011
(51) Int. Cl.: F16D 65/78, F16D 65/853

(54) **Disc brake**
Scheibenbremse
Frein à disque

(30) Priority: 23.12.2010 IT MO20100361
(43) Date of publication of application: 27.06.2012
(73) Proprietor: Comer Industries S.p.A., 20123 Milano (IT)
(72) Inventor: Prospero, Roberto, 37129 VERONA (IT)
(74) Representative: Modiano, Micaela Nadia

(56) References cited:
- EP-A2- 0 913 304
- DE-A1- 4 011 022
- DE-A1- 10 217 483
- DE-A1- 19 648 212
- DE-B- 1 214 101

## Description

The present invention relates to an oil disc brake with improved lubrication.

As is known, oil disc brakes are generally constituted by a box-like frame or housing which defines inside it a receptacle and supports, so that it can rotate about its own axis, a shaft which constitutes the mechanical element to be braked. Braking discs are arranged coaxially around this shaft and are alternated with complementary braking discs. The discs are jointly connected to the shaft in rotation about its axis, while the complementary discs are coupled, as regards this rotation, to the box-like frame so that they cannot be turned by the shaft and by the discs. The surfaces of the discs are generally covered with a material that has a suitable friction coefficient. Both the discs and the complementary discs can slide axially with respect to the shaft thanks to the action of a hydraulically or mechanically operated pusher, which packs the discs and complementary discs between two mutually opposite axial shoulders, of which one is generally defined by the pusher itself and the other is defined by the box-like frame or by an element fixed thereto. The pressure applied to the pack of discs and complementary discs by the pusher places in contact and presses together the mutually facing faces of the discs and of the complementary discs, achieving the effect of braking the discs and therefore the shaft.

The discs and complementary discs are at least partially immersed in a lubricating liquid, commonly known as "oil", among the functions of which there is that of dissipating, during braking, the heat generated due to friction between the discs and the complementary discs.

Oil disc brakes have various advantages, with respect to dry external brakes, including the fact that they cannot be exposed to the action of atmospheric agents and that they have a considerably lower wear if they are sized correctly.

On the other hand, oil disc brakes have the drawback of generating heat, and therefore of dissipating energy, more than dry external brakes, not only during braking, when dissipation is required for the braking effect, but also when the brake is not activated. This heat generation is caused by the sloshing of the lubricating liquid and of the laminar flow thereof in the confined space between the discs and the complementary discs as a consequence of the rotation of the discs with respect to the complementary discs.

In order to reduce this unwanted energy dissipation, it is possible to increase the play between the discs and the complementary discs or it is possible to reduce the level of the lubricating liquid in the housing, i.e., reduce the immersed surface of the discs and of the complementary discs.

However, the increase in play between the discs and the complementary discs requires a larger volume of liquid, which is necessary for the actuation of the hydraulic actuator of the brake, and this makes it difficult, if not impossible, to provide hydraulic braking systems which are not supplied, i.e., have a limited volumetric capacity.

The reduction of the level of lubricating liquid in the housing has the drawback of reducing the cooling capacity of the liquid during braking and therefore of reducing the life of the discs. Moreover, the low level of the lubricating liquid together with the centrifugal effect caused by the rotation of the discs prevents it from reaching the part of the discs and of the complementary discs that is closest to their axis.

For these reasons, oil disc brakes so far have been applied almost exclusively on mechanical elements that have a low rotation rate.

Oil disc brakes having a combination of elements as defined in the precharacterizing portion of the appended claim 1 are disclosed in DE 102 17 483 A1, DE 196 48 212 A1, and DE 40 11 022 A1.

The aim of the present invention is to solve the above mentioned problems, by providing an oil disc brake in which it is possible to obtain an adequate lubrication effect of the discs and of the complementary discs even with a reduced quantity of lubricating liquid.

Within this aim, an object of the invention is to provide an oil disc brake that ensures adequate lubrication also of the parts of the discs and complementary discs that are proximate to the axis and with a reduced quantity of lubricating liquid in the housing or box-like frame.

Another object of the invention is to provide a disc brake that has a low energy dissipation when it is not activated and therefore makes it possible, for an equal energy consumption, to increase the operating speed of the elements to be braked or which, for an equal operating speed, consumes less energy.

A further object of the invention is to provide a disc brake that is highly reliable in operation.

Another object of the invention is to provide a disc brake that is structurally simple and can be provided at competitive costs.

In accordance with the invention, there is provided an oil disc brake, as defined in the appended claims.

Further characteristics and advantages of the invention will become better apparent from the description of a preferred but not exclusive embodiment of the brake according to the invention, illustrated by way of non-limiting example in the accompanying drawings, wherein:

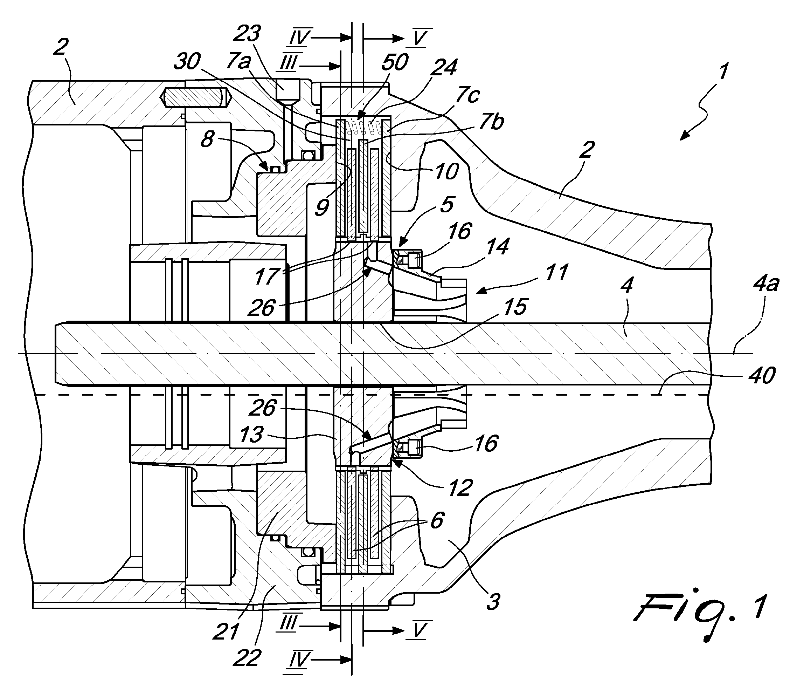

Figure 1 is a schematic axial sectional view of the brake according to the invention in the inactive condition;

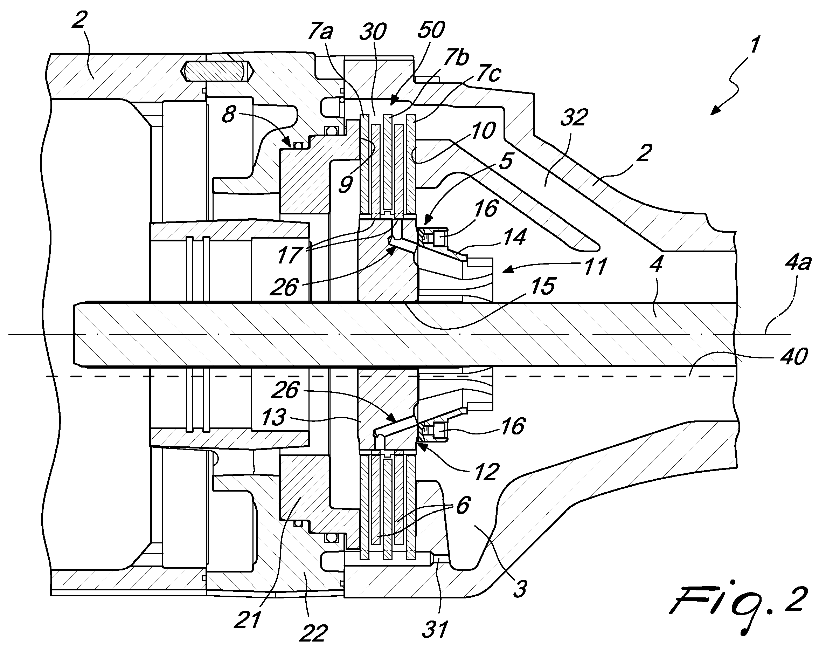

Figure 2 is another schematic axial sectional view of the brake according to the invention, again in the inactive condition;

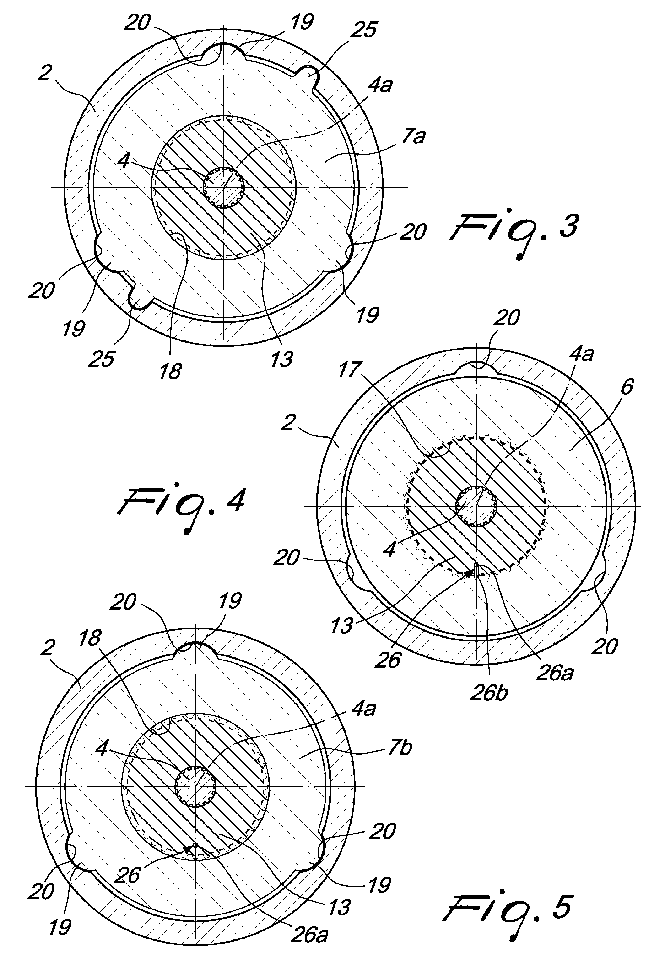

Figure 3 is a sectional view, taken along the line III-III of Figure 1;
Figure 4 is a sectional view, taken along the line IV-IV of Figure 1;
Figure 5 is a sectional view, taken along the line V-V of Figure 1;

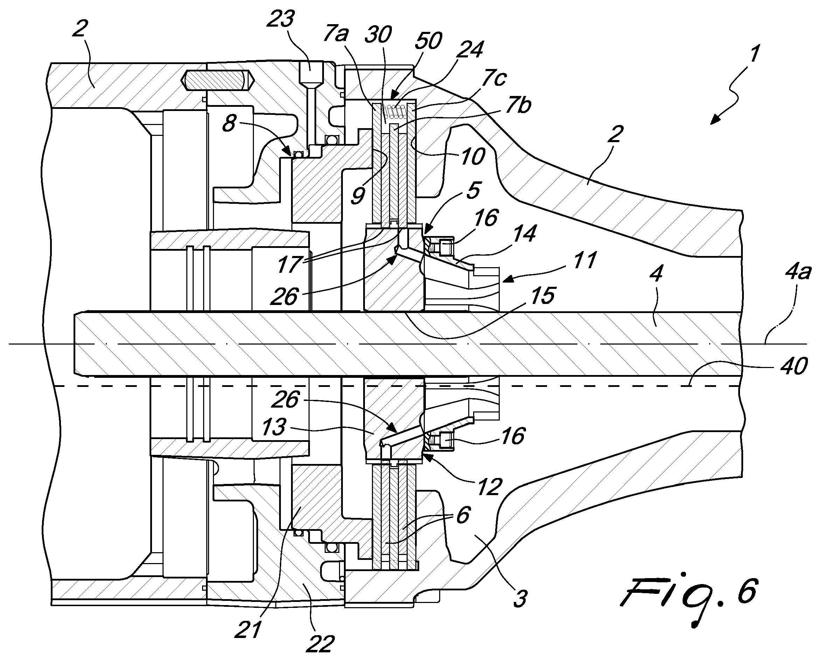

Figure 6 is a schematic view of the brake according to the invention, shown in cross-section as in Figure 1, in the activated condition;
Figure 7 is a front elevation view of a component of the brake according to the invention;
Figure 8 is a sectional view, taken along the line VIII-VIII of Figure 7;
Figure 9 is a sectional view, taken along the line IX-IX of Figure 7;
Figure 10 is a sectional view, taken along the line X-X of Figure 7;
Figure 11 is a perspective view of another component of the brake according to the invention;
Figure 12 is a front elevation view of the component of Figure 11;
Figure 13 is a sectional view, taken along the line XIII-XIII of Figure 12.

With reference to the figures, a disc brake according to the invention, generally designated by the reference numeral 1, comprises a box-like frame or housing 2 which defines internally a receptacle 3 and which supports, so that it can rotate about its own axis 4a, a shaft 4.

Around the shaft 4 a supporting element 5 is provided, which is jointly connected to the shaft 4 in rotation about its own axis 4a with respect to the box-like frame 2.

Braking discs 6 are arranged around the supporting element 5, which are coaxial to the shaft 4 and are jointly associated with the supporting element 5 in rotation about the axis 4a with the possibility of axial sliding.

Complementary braking discs 7a, 7b, 7c are also arranged around the supporting element 5, which are alternated with the braking discs 6 along the shaft 4 and are associated with the box-like frame 2 so as to be uncoupled from the rotation of the shaft 4 about its own axis 4a and be instead firmly coupled to the box-like frame 4, as regards this rotational motion, with the possibility to be translated with respect to the box-like frame 2 and the shaft 4 exclusively along a direction that is parallel to the axis 4a of the shaft 4.

The disc brake according to the invention further comprises braking means 8 which act on command on the discs 6 and on the complementary discs 7a, 7b, 7c so as to cause their packing along a direction which is parallel to the axis 4a of the shaft 4 between two mutually opposite axial abutments 9, 10.

According to the invention, the brake comprises means 11 for collecting a lubricating liquid 40 which is contained in the receptacle 3, and means 12 for distributing the lubricating liquid in a centrifugal radial direction on the discs 6 and on the complementary discs 7a, 7b, 7c.

More particularly, the supporting element 5 comprises a distribution bushing 13 and a collection bushing 14, which are fixed rigidly to each other.

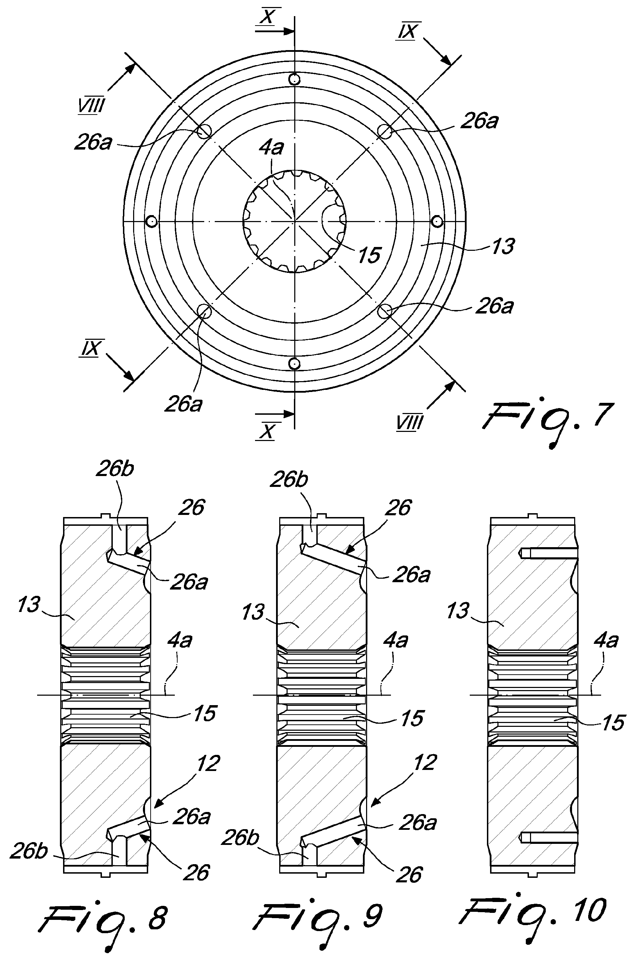

The distribution bushing 13, illustrated in particular in Figures 7 to 10, is crossed axially by a hole 15 which has a slotted profile and mates with a region of the shaft 4 that is shaped accordingly so that the distribution bushing 13 is jointly connected to the shaft 4 in rotation about the axis 4a with respect to the box-like frame 2 and can slide axially with respect to the shaft 4.

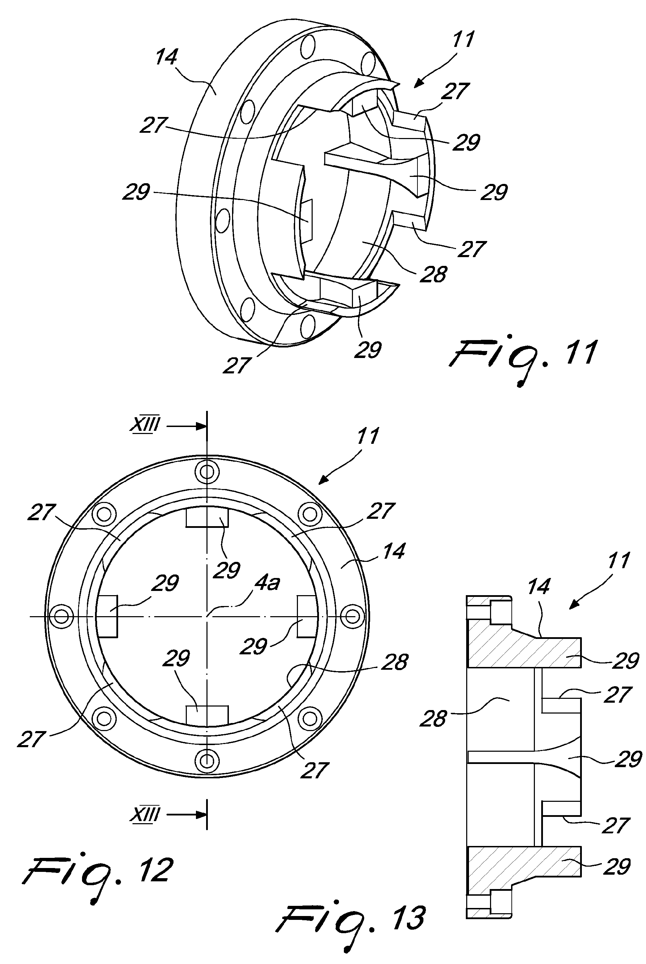

The collection bushing 14, illustrated in particular in Figures 11 to 13, is fixed with one of its end faces to an end face of the distribution bushing 13, for example by means of screws 16.

The lateral surface of the distribution bushing 13 is provided as a slotted profile and the discs 6 are crossed axially by a hole 17 with a slotted profile so that the discs 6 are jointly connected to the distribution bushing 13 in rotation about the axis 4a together with the shaft 4, with the possibility of axial sliding with respect to the distribution bushing 13.

The complementary discs 7a, 7b, 7c are crossed axially by a hole 18, which is crossed with play by the distribution bushing 13. The complementary discs 7a, 7b, 7c have, along their perimeter, protruding portions or tenons 19 which mate with recesses 20 defined for this purpose in the box-like frame 2. In this manner, the complementary discs 7a, 7b, 7c are locked to the box-like frame 2 as regards rotation about the axis 4a and can only translate with respect to the box-like frame 2 along a direction which is parallel to the axis 4a.

The braking means 8 can be constituted, in a manner known per se, by the piston 21 of a hydraulic cylinder 22, the body of which is provided directly in the box-like frame 2. The piston 21 can move parallel to the axis 4a with respect to the box-like frame 2 due to the introduction of a pressurized liquid in the supply duct 23 of the hydraulic cylinder 22.

The axial end of the piston 21 defines the axial abutment 9, resting against a face of a complementary end disc 7a, which is arranged at an axial end of the set of discs 6 and complementary discs 7a, 7b, 7c, while the other axial abutment 10 is defined by a flat portion, which is perpendicular to the axis 4a, of the box-like frame 2, which rests against a face of the complementary end disc 7c, which is arranged at the opposite end of the set of discs 6 and complementary discs 7a, 7b, 7c.

Conveniently, elastic means 24 are interposed between the end complementary discs 7a, 7c and are constituted for example by helical springs, which rest with their axial ends against peripheral protrusions 25 of the complementary end discs 7a, 7c. The elastic means 24, when the brake is not activated, i.e., when the supply duct 23 is connected to the discharge, ensure the separation of the discs 6 from the complementary discs 7a, 7b, 7c and maintain the contact of the complementary end discs 7a, 7c respectively against the axial shoulder 9 defined by the piston 21 and against the axial shoulder 10 defined by the box-like frame 2.

The collection means 11 and the distribution means 12 comprise ducts 26 for conveying the lubricating liquid, which are defined at least in the distribution bushing 13.

More particularly, the collection means 11 comprise openings 27 which are defined on the lateral surface of the collection bushing 14 and are connected to an annular chamber 28 defined between the inner lateral surface of the collection bushing 14 and the lateral surface of the shaft 4. The annular chamber 28 is provided, starting from the end of the collection bushing 14 that is directed away from the distribution bushing 13, with a first substantially cylindrical portion and with a second frustum-shaped portion which widens progressively toward the distribution bushing 13. Vanes 29 are provided on the inner lateral surface of the collection bushing 14 and are adapted to convey, by rotation of the collection bushing 14 jointly with the shaft 4, the lubricating liquid 40 toward the inlet of the conveyance ducts 26 defined on the face of the distribution bushing 13 that is connected to the collection bushing 14.

Advantageously, the conveyance ducts 26 are provided, starting from their mouth, with a first portion 26a which is extended so as to be inclined away from the axis 4a of the shaft 4, and with a second portion 26b which is extended substantially at right angles to the axis 4a of the shaft 4 and leads onto the lateral surface of the distribution bushing 13 of the region occupied by the discs 6 and by the complementary discs 7a, 7b, 7c.

Conveniently, the vanes 29 have a thickness that decreases progressively along a direction which is parallel to the axis 4a of the shaft 4 toward the distribution bushing 13.

Advantageously, confinement means 50 are provided, which delimit, inside the receptacle 3, a compartment 30 which contains the discs 6 and the complementary discs 7a, 7b, 7c. The compartment 30 is connected to the remaining part of the receptacle 3 through passages for controlled seepage 31.

The confinement means 50 comprise the two complementary end discs 7a, 7c, which delimit, in cooperation with the box-like frame 2, the compartment 30 that contains the discs 6 and the complementary discs 7a, 7b, 7c.

The shaft 4 is arranged so that its axis 4a is horizontal and the free surface of the lubricating liquid 40 in the receptacle 3 is preferably arranged below the axis 4a of the shaft 4. The controlled seepage passages 31 are arranged below the free surface of the lubricating liquid 40 in the receptacle 3.

As an alternative, or in combination, the passages produced by the play between the slotted profile of the bushing 13 and the hole 18 of the complementary end discs 7a and 7c can constitute passages for controlled seepage.

Conveniently, in a region of the box-like frame 2 that is arranged above the free surface of the lubricating liquid 40 inside the receptacle 3, the mouth of at least one return passage 32 is provided, which connects the compartment 30 to the remaining part of the receptacle 3.

The brake shown in the figures has two discs 6 and three complementary discs 7a, 7b, 7c, but the number of discs 6 and of complementary discs 7a, 7b, 7c can vary according to requirements.

The disc brake according to the invention can be used to brake any rotating shaft. Preferably, the brake according to the invention, due to its particular characteristics, is suitable to be used to brake an axle of a vehicle which, in this application, is constituted by the shaft 4.

Operation of the disc brake according to the invention is as follows.

When the brake is not activated, the discs 6 and the complementary discs 7a, 7b, 7c are mutually spaced so as to allow the free rotation of the shaft 4, and therefore of the discs 6, about the axis 4a with respect to the box-like frame 2 and the complementary discs 7a, 7b, 7c.

In this operating condition, the collection bushing 14, which is partially immersed in the lubricating liquid 40, during its rotation jointly with the shaft 4, by means of the vanes 29 collects part of the lubricating liquid 40 and, as a consequence of the shape of the vanes 29, and of the annular chamber 28, conveys it, by centrifugal effect, toward the distribution bushing 13, where it enters the conveyance ducts 26. Again due to the centrifugal effect produced by the rotation of the shaft 4 and of the distribution bushing 13, the lubricating liquid 40, introduced in the conveyance ducts 26, is propelled radially between the discs 6 and the complementary discs 7a, 7b, 7c, providing an effective lubrication effect. With high rotation rates of the shaft 4, the lubricating liquid 40 is moved away from the axis 4a, but since it is introduced between the discs 6 and the complementary discs 7a, 7b, 7c in a region proximate to the axis 4a, it still ensures an effective lubrication of the mutually facing faces of these elements, limiting their wear and the overheating of the lubricating liquid 40. The excess lubricating liquid 40 is then expelled from the compartment 30 through the return passage 32.

In practice, the brake according to the invention ensures an effective lubrication of the discs 6 and of the complementary discs 7a, 7b, 7c despite a small quantity of oil between the discs 6 and the complementary discs 7a, 7b, 7c, achieving a significant reduction in dissipated energy when the brake is not activated.

It should be noted that in the brake according to the invention the sloshing of the discs in the lubricant 40 is eliminated, since the discs 6, the complementary discs 7a, 7b, 7c and the affected lubricant remain confined within the compartment 30 without affecting the rest of the lubricant 40 contained in the compartment 3.

When the rotation rate of the shaft 4 is limited, the radial projection of the lubricating liquid 40 due to centrifugal effect is extremely small. In this case, the discs 6 and the complementary discs 7a, 7b, 7c are still lubricated by means of the lubricating liquid 40 which, through the calibrated seepage passages 31, passes within the compartment 30. The low rotation rate in any case makes it possible to obtain an adequate lubrication even in the presence of a reduced quantity of lubricating liquid 40 that passes through the controlled seepages passages 31.

The activation of the brake, as in conventional oil disc brakes, is achieved by introducing in the supply duct 23 a pressurized liquid, which by moving the piston 21 causes the packing of the discs 6 and of the complementary discs 7a, 7b, 7c between the axial abutments 9, 10. This packing increases significantly the friction between the discs 6 and the complementary discs 7a, 7b, 7c, causing the braking of the shaft 4.

In practice it has been found that the oil disc brake according to the invention fully achieves the intended aim, since it achieves an excellent lubrication effect even with a reduced quantity of lubricating liquid, thus making it possible to reduce energy dissipations when the brake is not activated. Due to this fact, for an equal energy consumption, the brake according to the invention makes it possible to increase the operating speed of the elements to be braked or, for an equal operating speed, makes it possible to reduce energy consumption.

The brake thus conceived is susceptible of numerous modifications and variations, all of which are within the scope of the appended claims; all the details may furthermore be replaced with other technically equivalent elements.

In practice, the materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An oil disc brake (1), comprising:
- a box-like frame (2), which defines internally a receptacle (3);
- a shaft (4), which is supported so that it can rotate about its own axis (4a) by said box-like frame (2);
- a supporting element (5), which is arranged around said shaft (4) and is jointly connected to said shaft (4) in rotation about its axis (4a);
- braking discs (6) which are arranged coaxially to said shaft (4) and are associated with said supporting element (5), said braking discs (6) being jointly connected to said shaft (4) in rotation about its own axis (4a);
- complementary braking discs (7a, 7b, 7c), which alternate with said braking discs (6) along said shaft (4) and are associated with said box-like frame (2), said complementary discs (7a, 7b, 7c) being movable with respect to said box-like frame (2) and with respect to said shaft (4) exclusively parallel to the axis (4a) of said shaft (4);
- braking means (8), which act on command on said discs (6) and on said complementary discs (7a, 7b, 7c) for their packing along a direction which is parallel to the axis (4a) of said shaft (4) between two mutually opposite axial abutments (9, 10); and
- means (11) for collecting a lubricating liquid (40) which is arranged in said receptacle (3) and means (12) for distributing said lubricating liquid (40) in a centrifugal radial direction on said discs (6) and said complementary discs (7a, 7b, 7c);
the disc brake (1) being **characterized in that** it comprises confinement means (50) comprised of two complementary end discs (7a, 7c) which are arranged at the axial ends of the set of complementary discs (7a, 7b, 7c), which delimit, in said receptacle (3) and in cooperation with said box-like frame (2), a compartment (30) which contains said discs (6) and said complementary discs (7a, 7b, 7c), said compartment (30) being connected to the remaining part of said receptacle (3) through passages for controlled seepage (31), the disc brake (1) further comprising at least one passage (32) for the return of said lubricating liquid (40), which connects said compartment (30) to the remaining part of said receptacle (3), the mouth of said at least one return passage (32) in said compartment (30) being arranged above the free surface of the lubricating liquid (40) in said receptacle (3).

2. The disc brake (1) according to claim 1, **characterized in that** said shaft (4) is arranged so that its axis (4a) is horizontal.

3. The disc brake (1) according to one or more of the preceding claims, **characterized in that** the free surface of said lubricating liquid (40) in said receptacle (3) is arranged below the axis (4a) of said shaft (4), said passages for controlled seepage (31) being arranged below the free surface of the lubricating liquid (40) in said receptacle (3).

4. The disc brake (1) according to one or more of the preceding claims, **characterized in that** elastic means (24) are interposed between said complementary end discs (7a, 7c) and contrast the mutual approach of said complementary end discs (7a, 7c).

5. The disc brake (1) according to one or more of the preceding claims, **characterized in that** said supporting element (5) comprises a distribution bushing (13) and a collection bushing (14), which are arranged coaxially around said shaft (4) and are laterally adjacent and fixed axially to each other, said collection means (11) and said distribution means (12) comprising ducts (26) for the conveyance of the lubricating liquid (40) which are defined at least in said distribution bushing (13).

6. The disc brake (1) according to claim 5,
**characterized in that** said collection means (11) comprise openings (27) which are defined on the lateral surface of said collection bushing (14) and are connected to an annular chamber (28) defined between the internal lateral surface of said collection bushing (14) and the side wall of said shaft (4), on the internal lateral surface of said collection bushing (14) vanes (29) being provided which are adapted to convey, by the rotation of said collection bushing (14) jointly with said shaft (4), the lubricating liquid (40) toward the mouth of said conveyance ducts (26) defined on the face of said distribution bushing (13) which is connected to said collection bushing (14).

7. The disc brake (1) according to claims 5 and 6,
**characterized in that** said conveyance ducts (26) have, starting from their mouth, a first portion (26a), which is extended at an angle away from the axis (4a) of said shaft (4), and a second portion (26b), which is extended substantially at right angles to the axis (4a) of said shaft (4) and leads onto the lateral surface of said distribution bushing (13) in the region occupied by said discs (6) and by said complementary discs (7a, 7b, 7c).

8. The disc brake (1) according to claim 6,
**characterized in that** said annular chamber (28) has a frustum-like shape which widens progressively toward said distribution bushing (13).

9. The disc brake (1) according to one or more of the preceding claims,
**characterized in that** said vanes (29) have a thickness that decreases progressively along a direction that is parallel to the axis (4a) of said shaft (4) toward said distribution bushing (13).

10. The disc brake (1) according to one or more of the preceding claims, **characterized in that** said shaft (4) is an axle of a vehicle.

## Patentansprüche

1. eine Öllamellenbremse (1), die Folgendes umfasst:
- einen kastenähnlichen Rahmen (2), der innen einen Behälter (3) bestimmt;
- eine Welle (4), die von dem kastenähnlichen Rahmen (2) so getragen wird, dass sie sich um ihre eigene Achse (4a) drehen kann;
- ein tragendes Element (5), das um die Welle (4) herum angeordnet und fest mit der Welle (4) verbunden ist, die in Drehung um ihre Achse (4a) ist;
- Bremsscheiben (6), die koaxial zu der Welle (4) angeordnet und die mit dem tragenden Element (5) verbunden sind, wobei die Bremsscheiben (6) fest mit der Welle (4) verbunden sind, die in Drehung um ihre eigene Achse (4a) ist;
- komplementäre Bremsscheiben (7a, 7b, 7c), die sich mit den Bremsscheiben (6) entlang der Welle (4) abwechseln und mit dem kastenähnlichen Rahmen (2) verbunden sind, wobei die komplementären Scheiben (7a, 7b, 7c) im Verhältnis zu dem kastenähnlichen Rahmen (2) und im Verhältnis zu der Welle (4) ausschließlich parallel zur Achse (4a) der Welle (4) beweglich sind;
- Bremsmittel (8), die auf Befehl auf die Scheiben (6) und auf die komplementären Scheiben (7a, 7b, 7c) einwirken zum Zwecke ihrer Verdichtung entlang einer Richtung, die parallel zur Achse (4a) der Welle (4) ist, zwischen zwei einander gegenüberliegenden axialen Widerlagern (9, 10); und
- Mittel (11) zum Sammeln einer Schmierflüssigkeit (40), die in dem Behälter (3) angeordnet ist, und Mittel (12) zum Verteilen der Schmierflüssigkeit (40) in einer zentrifugalen radialen Richtung auf die Scheiben (6) und auf die komplementären Scheiben (7a, 7b, 7c);
wobei die Scheibenbremse (1) **dadurch gekennzeichnet ist, dass** sie Einschlussmittel (50) umfasst, die aus zwei komplementären Endscheiben (7a, 7c) bestehen, welche an den axialen Enden des Satzes von komplementären Scheiben (7a, 7b, 7c) angeordnet sind, welche in dem Behälter (3) und im Zusammenwirken mit dem kastenähnlichen Rahmen (2) einen Hohlraum (30) begrenzen, der die Scheiben (6) und die komplementären Scheiben (7a, 7b, 7c) enthält, wobei der Hohlraum (30) mit dem übrigen Teil des Behälters (3) durch Leitungen zum kontrollierten Aussickern (31) verbunden ist, wobei die Lamellenbremse (1) weiter mindestens eine Leitung (32) für den Rückfluss der Schmierflüssigkeit (40) umfasst, welche den Hohlraum (30) mit dem übrigen Teil des Behälters (3) verbindet, wobei die Öffnung der mindestens einen Rückflussleitung (32) in dem Hohlraum (30) oberhalb der freien Oberfläche der Schmierflüssigkeit (40) in dem Behälter (3) angeordnet ist.

2. Die Lamellenbremse (1) gemäß Anspruch 1, **dadurch gekennzeichnet, dass** die Welle (4) so angeordnet ist, dass ihre Achse (4a) horizontal ist.

3. Die Lamellenbremse (1) gemäß einem oder mehreren der obigen Ansprüche, **dadurch gekennzeichnet, dass** die freie Oberfläche der Schmierflüssigkeit (40) in dem Behälter (3) sich unter der Achse (4a) der Welle (4) befindet, wobei die Leitungen zum kontrollierten Aussickern (31) unter der freien Oberfläche der Schmierflüssigkeit (40) in dem Behälter (3) angeordnet sind.

4. Die Lamellenbremse (1) gemäß einem oder mehreren der obigen Ansprüche, **dadurch gekennzeichnet, dass** elastische Mittel (24) zwischen den komplementären Endscheiben (7a, 7c) angeordnet sind und der gegenseitigen Annäherung der komplementären Endscheiben (7a, 7c) entgegenwirken.

5. Die Lamellenbremse (1) gemäß einem oder mehreren der obigen Ansprüche, **dadurch gekennzeichnet, dass** das tragende Element (5) eine Verteilungsbuchse (13) und eine Sammelbuchse (14) umfasst, die koaxial um die Welle (4) herum angeordnet und seitlich angrenzend und axial aneinander befestigt sind, wobei die Sammelmittel (11) und die Verteilungsmittel (12) Kanäle (26) zur Förderung der Schmierflüssigkeit (40) umfassen, welche mindestens in der Verteilungsbuchse (13) bestimmt sind.

6. Die Lamellenbremse (1) gemäß Anspruch 5, **dadurch gekennzeichnet, dass** die Sammelmittel (11) Öffnungen (27) umfassen, die auf der seitlichen Oberfläche der Sammelbuchse (14) bestimmt und mit einer ringförmigen Kammer (28) verbunden sind, welche zwischen der inneren Seitenoberfläche der Sammelbuchse (14) und der Seitenwand der Welle (4) bestimmt ist, wobei an der inneren Seitenoberfläche der Sammelbuchse (14) Schaufeln (29) angebracht sind, die ausgebildet sind, um durch die Drehung der Sammelbuchse (14) zusammen mit der Welle (4) die Schmierflüssigkeit (40) zur Öffnung der Förderleitungen (26) hin zu befördern, die auf der Fläche der Verteilungsbuchse (13) bestimmt ist, welche mit der Sammelbuchse (14) verbunden ist.

7. Die Lamellenbremse (1) gemäß den Ansprüchen 5 und 6, **dadurch gekennzeichnet, dass** die Förderleitungen (26), ausgehend von ihrer Öffnung, einen ersten Abschnitt (26a) haben, der in einem Winkel fort von der Achse (4a) der Welle (4) verlängert ist, und einen zweiten Abschnitt (26b), der im Wesentlichen in rechten Winkeln zur Achse (4a) der Welle (4) verlängert ist und zur seitlichen Oberfläche der Verteilungsbuchse (13) in dem Bereich führt, der von den Scheiben (6) und von den komplementären Scheiben (7a, 7b, 7c) eingenommen wird.

8. Die Lamellenbremse (1) gemäß Anspruch 6, **dadurch gekennzeichnet, dass** die ringförmige Kammer (28) eine kegelstumpfartige Form hat, die sich zur Verteilungsbuchse (13) hin progressiv verbreitert.

9. Die Lamellenbremse (1) gemäß einem oder mehreren der obigen Ansprüche, **dadurch gekennzeichnet, dass** die Schaufeln (29) eine Dicke haben, die progressiv zur Verteilungsbuchse (13) hin entlang einer Richtung abnimmt, welche parallel zur Achse (4a) der Welle (4) ist.

10. Die Lamellenbremse (1) gemäß einem oder mehreren der obigen Ansprüche, **dadurch gekennzeichnet, dass** die Welle (4) eine Achse eines Fahrzeugs ist.

## Revendications

1. Frein à disque (1) à huile, comprenant :
- un cadre en forme de caisson (2), qui délimite en son sein un réceptacle (3) ;
- un arbre (4), qui est supporté de façon à pouvoir tourner sur son propre axe (4a) par ledit cadre en forme de caisson (2) ;
- un élément de support (5), qui est agencé autour dudit arbre (4) et est relié conjointement audit arbre (4) en rotation sur son axe (4a) ;
- des disques de freinage (6) qui sont agencés de façon coaxiale audit arbre (4) et sont associés audit élément de support (5), lesdits disques de freinage (6) étant conjointement reliés audit arbre (4) en rotation sur son propre axe (4a) ;
- des disques de freinage complémentaires (7a, 7b, 7c), qui alternent avec lesdits disques de freinage (6) le long dudit arbre (4) et sont associés audit cadre en forme de caisson (2), lesdits disques complémentaires (7a, 7b, 7c) étant mobiles par rapport audit cadre en forme de caisson (2) et par rapport audit arbre (4) exclusivement parallèle à l'axe (4a) dudit arbre (4) ;
- des moyens de freinage (8), qui agissent avec la commande desdits disques (6) et desdits disques complémentaires (7a, 7b, 7c) pour leur garniture le long d'une direction qui est parallèle à l'axe (4a) dudit arbre (4) entre deux butées axiales (9, 10) mutuellement opposées ; et
- des moyens (11) pour collecter un liquide lubrifiant (40) qui est agencé dans ledit réceptacle (3) et des moyens (12) pour distribuer ledit liquide lubrifiant (40) dans une direction radiale centrifuge sur lesdits disques (6) et lesdits disques complémentaires (7a, 7b, 7c) ;
le frein à disque (1) étant **caractérisé en ce qu'**il comprend des moyens de confinement (50) composés de deux disques d'extrémité (7a, 7c) complémentaires qui sont agencés au niveau des extrémités axiales de l'ensemble de disques complémentaires (7a, 7b, 7c), qui délimitent, dans ledit réceptacle (3) et en association avec ledit cadre en forme de caisson (2), un compartiment (30) qui contient lesdits disques (6) et lesdits disques complémentaires (7a, 7b, 7c), ledit compartiment (30) étant relié à la partie restante dudit réceptacle (3) par le biais de passages pour un suintement contrôlé (31), le frein à disque (1) comprenant en outre au moins un passage (32) pour le retour dudit liquide lubrifiant (40), qui relie ledit compartiment (30) à la partie restante dudit réceptacle (3), l'embouchure dudit au moins un passage (32) de retour dans ledit compartiment (30) étant agencée au-dessus de la surface libre du liquide lubrifiant (40) dans ledit réceptacle (3).

2. Frein à disque (1) selon la revendication 1, **caractérisé en ce que** ledit arbre (4) est agencé de sorte que son axe (4a) soit horizontal.

3. Frein à disque (1) selon une ou plusieurs des revendications précédentes, **caractérisé en ce que** la surface libre dudit liquide lubrifiant (40) dans ledit réceptacle (3) est agencée au-dessous de l'axe (4a) dudit arbre (4), lesdits passages pour le suintement contrôlé (31) étant agencés au-dessous de la surface libre du liquide lubrifiant (40) dans ledit réceptacle (3).

4. Frein à disque (1) selon une ou plusieurs des revendications précédentes, **caractérisé en ce que** des moyens élastiques (24) sont interposés entre lesdits disques d'extrémité complémentaires (7a, 7c) et contrent l'approche mutuelle desdits disques d'extrémité complémentaires (7a, 7c).

5. Frein à disque (1) selon une ou plusieurs des revendications précédentes, **caractérisé en ce que** ledit élément de support (5) comprend une bague de distribution (13) et une bague de collecte (14), qui sont agencées de façon coaxiale autour dudit arbre (4) et sont latéralement adjacentes et fixées de façon axiale l'une par rapport à l'autre, lesdits moyens de collecte (11) et lesdits moyens de distribution (12) comprenant des conduites (26) pour le transport du liquide lubrifiant (40) qui sont définies au moins dans ladite bague de distribution (13).

6. Frein à disque (1) selon la revendication 5,
**caractérisé en ce que** lesdits moyens de collecte (11) comprennent des ouvertures (27) qui sont définies sur la surface latérale de ladite bague de collecte (14) et sont reliées à une chambre annulaire (28) définie entre la surface latérale interne de ladite bague de collecte (14) et la paroi latérale dudit arbre (4), sur la surface latérale interne de ladite bague de collecte (14) des vannes (29) étant prévues et adaptées au transport, par la rotation de ladite bague de collecte (14) conjointement avec ledit arbre (4), du liquide lubrifiant (40) vers l'embouchure desdites conduites (26) de transport définies sur la face de ladite bague de distribution (13) qui est reliée à ladite bague de collecte (14).

7. Frein à disque (1) selon les revendications 5 et 6,
**caractérisé en ce que** lesdites conduites (26) de transport possèdent, en partant de leur embouchure, une première partie (26a), qui s'étend en formant un angle s'éloignant de l'axe (4a) dudit arbre (4), et une seconde partie (26b), qui s'étend sensiblement à angle droit par rapport à l'axe (4a) dudit arbre (4) et mène sur la surface latérale de ladite bague de distribution (13) dans la région occupée par lesdits disques (6) et par lesdits disques complémentaires (7a, 7b, 7c).

8. Frein à disque (1) selon la revendication 6,
**caractérisé en ce que** ladite chambre annulaire (28) possède une forme de tronc conique qui s'élargit progressivement vers ladite bague de distribution (13).

9. Frein à disque (1) selon une ou plusieurs des revendications précédentes, **caractérisé en ce que** lesdites vannes (29) ont une épaisseur qui diminue progressivement le long d'une direction qui est parallèle à l'axe (4a) dudit arbre (4) vers ladite bague de distribution (13).

10. Frein à disque (1) selon une ou plusieurs des revendications précédentes, **caractérisé en ce que** ledit arbre (4) est un essieu de véhicule.
